# EUROPÄISCHE PATENTSCHRIFT

(11) **EP 0 524 290 B1**
(45) Veröffentlichungstag und Bekanntmachung des Hinweises auf die Patenterteilung: **28.06.1995**
(21) Anmeldenummer: 92904322.2
(22) Anmeldetag: 04.02.1992
(51) Int. Cl.: B65G 47/64, F16H 21/02, F15B 15/06

(54) **VORRICHTUNG ZUM AUSSCHWENKEN EINES AUSSCHWENKMODULS AUS EINER FÖRDERBANDSTRECKE**
DEVICE FOR OPERATING A CONVEYOR-BELT SLEW-OUT MODULE
DISPOSITIF DE PIVOTEMENT D'UN MODULE PIVOTABLE SITUE SUR UNE SECTION DE BANDE CONVOYEUSE

(30) Priorität: 08.02.1991 DE 4103849
(43) Veröffentlichungstag der Anmeldung: 27.01.1993
(73) Patentinhaber: Licentia Patent-Verwaltungs-GmbH, 60596 Frankfurt (DE)
(72) Erfinder: MALOW, Siegmar, D-78465 Konstanz (DE)
(74) Vertreter: Vogl, Leo, Dipl.-Ing.
(86) Internationale Anmeldenummer: EP9200228
(87) Internationale Veröffentlichungsnummer: WO9213784

(56) Entgegenhaltungen:
- BE-A- 572 687
- FR-A- 2 080 777
- FR-A- 2 104 687
- US-A- 3 169 630
- TECHNICA Bd. 24, 1983, ZÜRICH, Seiten 2083-2088; KURT HAIN: 'FLEXIBLE HANDHABUNGSGETRIEBE MIT ZWEI LINEARANTRIEBEN'
- HARRY L. STEWART 'HYDRAULIC AND PNEUMATIC POWER FOR PRODUCTION' 1970 ,INDUSTRIAL PRESS INC. , NEW YORK

## Beschreibung

Die Erfindung bezieht sich auf eine Vorrichtung gemäß dem Oberbegriff des Anspruchs 1.

Aus der FR-A-2.104.687 ist ein Ausschwenkmodul bekannt, der im Rahmen einer Förderstrecke nach links oder rechts verschwenkbar ist. Die Verschwenkung erfolgt dabei auf einer Kreisbahn innerhalb einer Führungsschiene.

Aus TECHNICA, Band 24, 1983, Zürich, S. 2083-2088; Kurt Hain: "Flexible Handhabungsgetriebe mit zwei Linearantrieben" ist eine aus einem Koppeldreieck bestehende Vorrichtung mit zwei an deren Eckpunkten schwenkbar angeordneten Kolbenstangen von Betätigungszylindern bekannt. Aus Harry L. Stewart "Hydraulic AND PNEUMATIC POWER FOR PRODUCTlON", 1970, INDUSTRIAL PRESS INC., New York, ist eine Betätigung von zwei zueinander zugeordneten Zylindern bekannt, wobei jeweils nur ein Zylinder betätigt wird und der andere Zylinder in eingefahrenem oder ausgefahrenem Zustand als Stab wirkt.

Aufgabe der Erfindung ist es, eine Ausschwenkvorrichtung für einen Ausschwenkmodul zu schaffen, der einen schnellen gedämpften Schwenkvorgang ermöglicht, ohne daß Dämpfungsanschläge am Ende der Schwenkbewegung erforderlich sind.

Die erfindungsgemäße Lösung ist in den Merkmalen des Anspruchs 1 angegeben.

Ein Ausführungsbeispiel der Erfindung ist nachfolgend an Hand der beiliegenden Zeichnungen beschrieben:
- Fig. 1: zeigt einen Ausschwenkmodul in schematischer Darstellung,
- Fig. 2: eine schematische Darstellung des Ausschwenkmoduls von oben mit darunter angeordnetem Koppeldreieck und den Betätigungszylinder,
- Fig. 3: in schematischer Darstellung die Bewegung des Koppeldreiecks bei Links- und Rechtsausschwenkung,
- Fig. 4: die konstruktive Ausbildung des Koppeldreiecks mit den beiden Betätigungszylindern.

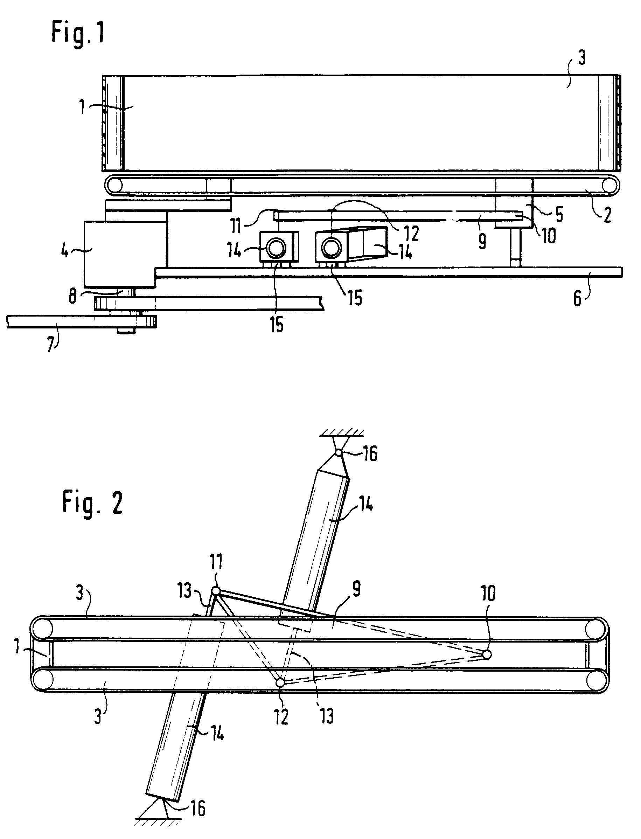

In der Fig. 1 ist mit 1 der Ausschwenkmodul bezeichnet, der aus einem Unterflurband 2 und Seitenflurbändern 3 besteht. Der Ausschwenkmodul 1 ist auf einem Lagerbock 4 schwenkbar gelagert und stützt sich über eine Abstützbrücke 5 auf einer Grundplatte 6 ab, die starr am Lagerbock 4 befestigt ist. Der Antrieb der Bänder erfolgt über einen Bänderantrieb 7, dessen Welle 8 durch den Lagerbock geführt ist.

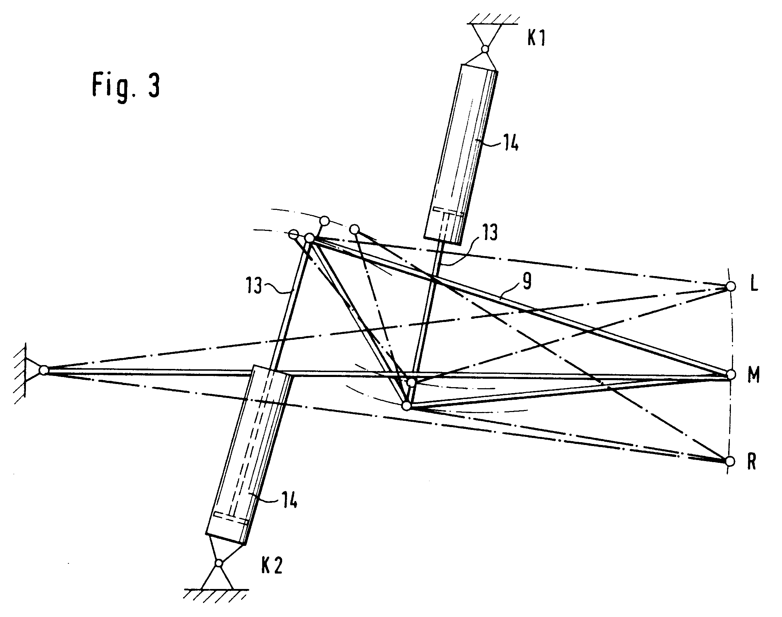

Unterhalb des Ausschwenkmoduls 1 ist ein Koppeldreieck 9 angeordnet, dessen einer Eckpunkt 10 drehbar an der Abstützbrücke 5 angelenkt ist und dessen beide weiteren Eckpunkte 11 und 12 an den Schubstangen 13 von pneumatischen Zylindern 14 angelenkt sind. Die Gehäuse der pneumatischen Zylinder 14 sind über Lagerflansche 15 auf der Grundplatte 6 schwenkbar befestigt. In Fig. 2 und 3 ist dies schematisch durch schwenkbare Festlegung der Endpunkte 16 der Zylinder 14 dargestellt.

In Fig. 3 ist der Bewegungsablauf des Koppeldreiecks 9 bei Betätigung der Schubstange 13 der Zylinder 14 dargestellt.

In Ruhestellung wird die Mittelstellung M eingenommen, d.h. der Zylinder K1 ist ausgefahren und der Zylinder K2 ist eingefahren. Will man z.B. nach links ausschwenken, fährt Zylinder K1 ein und Zylinder K2 behält seinen Zustand eingefahren. Der Ausschwenkmodul 1 bleibt dann so lange ausgeschwenkt, bis das auszuschleusende Gut den Förderkanal durchlaufen hat. Danach wird wiederum die Mittelstellung eingenommen. Beim Rechtsausschwenken (von der Mittelstellung ausgehend) fährt Zylinder K2 aus; Zylinder K1 behält seinen Zustand bei, d.h. egal ob er nach links oder nach rechts ausgeschwenkt ist. Es sind niemals beide Zylinder gleichzeitig in Bewegung, sondern je nach Auslenkungsrichtung ist jeweils nur ein Zylinder in Aktion, der andere Zylinder wirkt als Stab. Es sind auch Zwischenstellungen zwischen M und R und M und L möglich. Je nach Anordnung läßt sich mit diesen Zwischenstellungen z.B. eine Parallelverschiebung oder eine zusätzliche Stellung zwischen den Ausschwenkpunkten M und R und M und L realisieren. Alls Stellungen L, M, R und Zwischenstellungen sind sogenannte Extremlagen, d.h. die Zylinder K1 und K2 sind immer in Endlagen entweder ein- oder ausgefahren.

Durch die Anordnung von pneumatischen Zylindern besteht die Möglichkeit in der ein- und ausgefahrenen Stellung eine Dämpfung beim Verschwenken über die Zylinder zu erhalten.

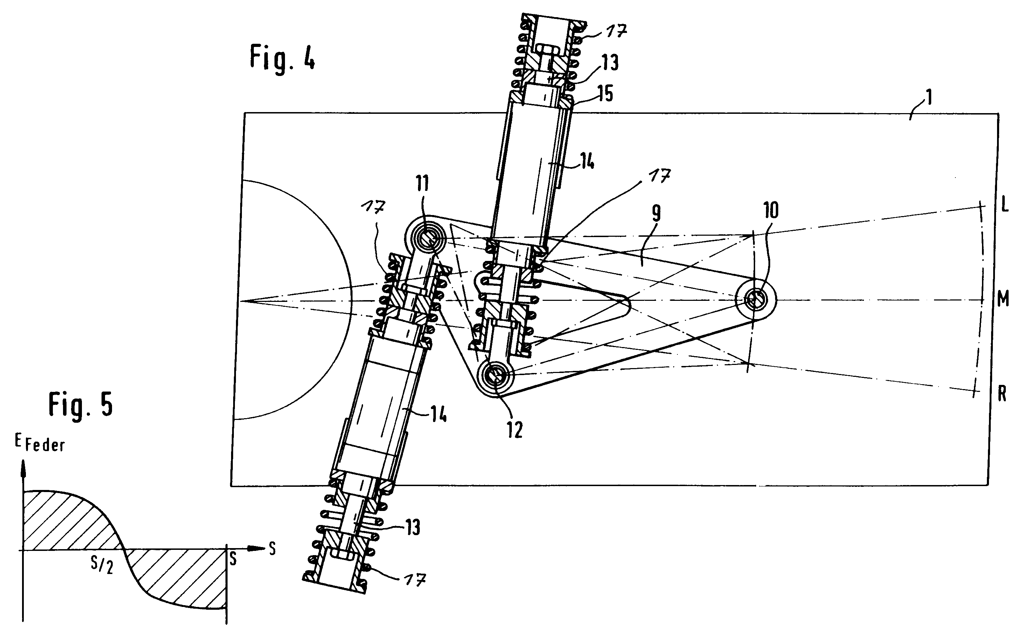

In Fig. 4 ist ein Ausführungsbeispiel eines erfindungsgemäßen Ausschwenkmoduls dargestellt, bei dem durch Einsatz von Zug- bzw. Druckfedern 17 an den Schubstangen 13 der pneumatischen Zylinder 14 (K1 und K2) zwei voneinander unabhängige Resonanzsysteme aufgebaut werden können. Durch die Anordnung dieser Federn 17 ist es möglich, daß nur noch die Reibung und die jeweilige ausschwenkbare Masse berücksichtigt werden muß, da die benötigte Energie beim Ausschwenken des Moduls nicht verlorengeht, sondern in Form von Federenergie gespeichert wird. Dadurch werden ebenfalls die mechanisch beanspruchten Teile wesentlich niedriger belastet. Dies führt somit zu einer Erhöhung der Lebensdauer des Systems und zu höheren Ausschwenkfrequenzen. Die Zylinder 14 (K1 und K2) haben dann für die jeweiligen Schwingungssysteme Arretierungsfunktion und für das Ausschwenken reine Beschleunigungsfunktion, wobei das Federsystem jeweils noch unterstützend bzw. reduzierend wirkt.

In Fig. 5 ist die Energie der Feder in Abhängigkeit vom Weg aufgetragen. Bei Verwendung von pneumatischen Steuerzylindern können die Ausschwenkfrequenzen auch noch durch die pneumatische Einstellung verändert werden.

## Patentansprüche

1. Vorrichtung zum Ausschwenken eines Ausschwenkmoduls aus einer Förderbandstrecke bestehend aus einem Koppeldreieck (9) mit an zwei seiner Endpunkte (11, 12) schwenkbar angeordneten Kolbenstangen (13) von Betätigungszylindern (14), dadurch gekennzeichnet, daß der dritte Eckpunkt (10) am Ausschwenkmodul (1) angeordnet ist, wobei an den Kolbenstangen (13) der Betätigungszylinder (14) Federn (17) derart angeordnet sind, daß bei der Schwenkbewegung durch die Federn (17) des einen Zylinders (14) eine Unterstützung der Schwenkbewegung erfolgt, und wobei jeweils nur ein Zylinder (14) betätigt wird und der andere im eingefahrenem oder ausgefahrenem Zustand als Stab wirkt.

2. Vorrichtung nach Anspruch 1, dadurch gekennzeichnet, daß die Betätigungszylinder (14) mittels Lagerflanschen (15) auf einer Grundplatte (6) schwenkbar befestigt sind.

3. Vorrichtung nach Anspruch 3, dadurch gekennzeichnet, daß die Grundplatte (6) auf einem Lagerbock (4) starr befestigt ist und der Ausschwenkmodul (1) um den Lagerbock (4) schwenkbar angeordnet ist.

4. Vorrichtung nach Anspruch 1 oder den folgenden, dadurch gekennzeichnet, daß der Ausschwenkmodul (1) über eine Abstütz brücke (5) schwenkbar abgestützt ist.

5. Vorrichtung nach Anspruch 4, dadurch gekennzeichnet, daß die Federn (17) zwischen den Anlenkpunkten (11, 12) des Koppeldreiecks (9) und den Gehäusen der pneumatischen Zylinder (14) angeordnet sind.

## Claims

1. Device for the slewing out of a slew-out module from a conveyor belt path, consisting of a coupling triangle (9) with piston rods (13), which are pivotably arranged at two of its end points (11, 12), of actuating cylinders (14), characterised thereby that the third corner point (10) is arranged at the slew-out module (1), wherein springs (17) are arranged at the piston rods (13) of the actuating cylinders (14) in such a manner that in the case of pivot movement by the springs (17) of the one cylinder (14) an assistance of the pivot movement takes place, and wherein each time only one cylinder (14) is actuated and the other acts in the retracted or extended state as a rod.

2. Device according to claim 1, characterised thereby that the actuating cylinders (14) are pivotably fastened on a base plate (6) by means of bearing flanges (15).

3. Device according to claim 3, characterised thereby that the base plate (6) is rigidly fastened on a bearing block (4) and the slew-out module (1) is arranged to be pivotable about the bearing block (4).

4. Device according to claim 1 or the following, characterised thereby that the slew-out module (1) is pivotably supported by way of a support bridge (5).

5. Device according to claim 4, characterised thereby that the springs (17) are arranged between the articulation points (11, 12) of the coupling triangle (9) and the housings of the pneumatic cylinders (14).

## Revendications

1. Dispositif pour le pivotement d'un module pivotant hors d'une ligne de bande de transport, constitué par un triangle de couplage (9) comportant à deux de ses coins (11, 12) des bielles (13) de cylindres d'actionnement (14) agencées en pivotement, caractérisé en ce que le troisième coin (10) est agencé sur le module pivotant (1); dans lequel des ressorts (17) sont agencés sur les bielles (13) des cylindres d'actionnement (14) de telle sorte que lors du mouvement de pivotement, il se produit via les ressorts (17) de l'un des cylindres (14) une assistance du mouvement de pivotement, et dans lequel respectivement un seul cylindre (14) est actionné et l'autre cylindre à l'état rétracté ou déployé fait office de tige.

2. Dispositif selon la revendication 1, caractérisé en ce que les cylindres d'actionnement (14) sont fixés en pivotement au moyen de brides de montage (15) sur un plateau de base (6).

3. Dispositif selon la revendication 2, caractérisé en ce que le plateau de base (6) est fixé rigidement sur un socle de support (4), et en ce que le module pivotant (1) est agencé en pivotement autour du socle de support (4).

4. Dispositif selon la revendication 1 ou l'une quelconque des revendications suivantes, caractérisé en ce que le module pivotant (1) est supporté en pivotement via un pont d'appui (5).

5. Dispositif selon la revendication 4, caractérisé en ce que les ressorts (17) sont agencés entre les points d'articulation (11, 12) du triangle de couplage (9) et les boîtiers des cylindres pneumatiques (14).
